# DEMANDE DE BREVET EUROPEEN

(11) **EP 0 821 903 A1**
(43) Date de publication de la demande: **04.02.1998**
(21) Numéro de dépôt: 97480030.2
(22) Date de dépôt: 28.05.1997
(51) Int. Cl.: A47J 27/14

(54) **Préparateur culinaire multifonctionnel programmable**

(30) Priorité: 29.05.1996 FR 9607166
(71) Demandeur: Gentech, S.A., 06410 Biot (FR)
(72) Inventeur: Khashoggi, Alaa, 06220 Golfe-Juan (FR)
(74) Mandataire: Hammond, William

(57) **Abrégé**

L'invention concerne un préparateur culinaire pour la fabrication de plats cuisinés, comprenant un corps (1) principal, un récipient (2) de préparation, un conteneur (2) divisé en plusieurs compartiments (9, 10) destiné à contenir des ingrédients, disposé au-dessus du récipient (2), chaque compartiment (9, 10) comportant une ouverture (11, 12), des moyens (13) de mise en communication des compartiments (9, 10) du conteneur (3) avec le récipient (2) et leurs moyens (15, 16) d'entraînement, des moyens (20 à 22) de manipulation des ingrédients dans le récipient (2) et leurs moyens (35, 36 à 38) d'entraînement, des moyens (6) de chauffage du récipient, des moyens (41, 42) de programmation et de commande, préparateur dans lequel le conteneur (3) est monté fixe sur le récipient (2) au moyen d'un élément intermédiaire (4) en position de fonctionnement, le récipient (2), le conteneur (3) et l'élément intermédiaire (4) constituent un ensemble qui est monté fixe sur le corps (1) du préparateur en position de fonctionnement, et les moyens (13) de mise en communication des compartiments (9, 10) du conteneur (3) avec le récipient (2) sont disposés dans l'élément intermédiaire (4).

## Description

L'invention concerne un préparateur culinaire multifonctionnel programmable pour la préparation de plats cuisinés.
On utilise, pour la préparation de plats cuisinés, des appareils de cuisson programmables qui permettent la réalisation de recettes de cuisine. Ces appareils commandent une succession d'étapes de réalisation des recettes, comprenant la cuisson, l'ajout d'ingrédients, le mélange des ingrédients.
A cet effet, un type d'appareil de cuisson connu comprend un récipient de préparation, généralement de forme cylindrique, ainsi que des moyens de chauffage de ce récipient et des moyens de mélange à l'intérieur de ce récipient, qui sont constitués par une spatule rotative. Le récipient de préparation comporte généralement un couvercle présentant une ouverture pour permettre l'ajout d'ingrédients.
Au-dessus du récipient de préparation est disposé un carrousel compartimenté destiné à contenir les différents ingrédients de la recette. Le fond de chaque compartiment comporte une ouverture de vidange, équipée d'un obturateur mobile. Le carrousel est actionné en mouvements de rotation pas à pas, de façon à amener successivement chacun des compartiments au-dessus de l'ouverture du couvercle. L'obturateur mobile est alors déplacé, par exemple par un mécanisme à cames, de façon à dégager l'ouverture de vidange.
L'ensemble des fonctions de l'appareil, notamment l'ordre et la durée des étapes de cuisson, mélange, ajout d'ingrédients, etc., sont commandés par un automate programmable, sur la base de programmes-recettes sélectionnés par l'utilisateur.
Un exemple d'appareil de ce type est présenté dans le brevet US N° 4 649 810.
Un inconvénient des appareils connus réside dans le nombre élevé de pièces en mouvement. Notamment, la solution du carrousel rotatif nécessite des moyens d'actionnement compliqués. Les mécanismes d'obturateur mobile sont également compliqués et se dérèglent facilement.
En outre, malgré la construction sophistiquée de ces appareils, les moyens de traitement de la nourriture sont limités, puisqu'ils se limitent à la cuisson, au mélange et à l'ajout d'ingrédients.

Un des buts de l'invention est de remédier à ces inconvénients et de proposer un appareil programmable de préparation de plats cuisinés présentant un mécanisme d'actionnement simplifié, de façon à améliorer ses performances et sa fiabilité.
Un autre but de l'invention est de proposer un appareil programmable doté de fonctions supplémentaires, de façon à permettre la réalisation de recettes plus complexes, et notamment, combinant les fonctions des appareils de cuisson avec ceux des robots ménagers traditionnels.

A cet effet, un préparateur culinaire selon l'invention pour la fabrication de plats cuisinés, comprenant :
. un corps principal du préparateur ;
. un récipient de préparation du plat cuisiné ;
. un conteneur divisé en plusieurs compartiments destinés à contenir les ingrédients du plat cuisiné, qui est disposé au-dessus du récipient, chaque compartiment comportant une ouverture ;
. des moyens de mise en communication des compartiments du conteneur et du récipient et des moyens d'entraînement de ces moyens de mise en communication à partir du corps principal du préparateur ;
. des moyens de manipulation des ingrédients dans le récipient, et des moyens d'entraînement de ces moyens de manipulation à partir du corps principal du préparateur ;
. des moyens de chauffage du récipient ;
. des moyens de programmation et de commande des moyens de chauffage, de manipulation, de mise en communication et d'entraînement ;
est caractérisé par le fait que :
. le conteneur est monté fixe sur le récipient au moyen d'un élément intermédiaire en position de fonctionnement ;
. le récipient, le conteneur et l'élément intermédiaire constituent un ensemble qui est monté fixe sur le corps du préparateur en position de fonctionnement ;
. les moyens de mise en communication des compartiments du conteneur avec le récipient sont disposés dans l'élément intermédiaire.

De préférence, l'ensemble formé par le récipient, l'élément intermédiaire et le conteneur est amovible, et le préparateur comprend des moyens de verrouillage/déverrouillage de cet ensemble sur le corps du préparateur, ainsi que des moyens de couplage/découplage des moyens d'entraînement entre l'ensemble et le corps du préparateur.

De préférence, les compartiments sont disposés en secteurs.

Selon une première forme de réalisation, les moyens de mise en communication sont constitués par un disque rotatif comportant une ouverture.
Pour les ingrédients liquides, l'ouverture d'au moins un compartiment comporte un obturateur situé sur le trajet de l'ouverture du disque rotatif et qui est rappelé en position éloignée de l'ouverture du compartiment par un ressort, de façon à être ouvert lorsque l'ouverture du disque se trouve au droit de l'ouverture du compartiment, et fermé sinon.
Le bord de l'ouverture du disque rotatif situé à l'arrière dans le sens de rotation du disque est alors de préférence incliné de haut en bas vers l'intérieur de l'ouverture, de façon à faciliter la remontée du ou des obturateurs.

Selon une seconde forme de réalisation :
. les moyens de mise en communication comprennent une came centrale rotative ;
. chaque compartiment du conteneur est muni de volets articulés susceptibles d'obturer son ouverture ;
. les volets de chaque compartiment sont rappelés vers une position ouverte par des ressorts, et sont maintenus en position fermée par un verrou ;
. les verrous des compartiments sont disposés de façon à pouvoir être actionnés successivement en ouverture par la came centrale rotative.

Selon un premier mode de réalisation des moyens de manipulation des aliments, ces derniers sont portés par l'élément intermédiaire.
Selon un second mode de réalisation, les moyens de manipulation sont portés par une base déportée du corps de l'appareil.

Les moyens d'entraînement des moyens d'agitation et/ou de mise en communication peuvent comprendre au moins un moteur et un ensemble d'engrenages connectés à des pignons d'axe des moyens de manipulation.
En variante, les moyens d'entraînement peuvent comprendre au moins un moteur et un ensemble de courroies entourant des poulies d'axes des moyens de manipulation.

Le récipient est avantageusement de forme cylindrique de révolution, les moyens de manipulation comprenant des moyens de mélange, des moyens d'agitation et des moyens de découpe, ces moyens étant montés à rotation sur un ensemble d'axes gigognes selon un axe vertical central du récipient.
Les moyens de mélange peuvent comprendre des spatules avec au moins un flanc horizontal et un flanc vertical excentré adjacent à la paroi périphérique verticale du récipient.
Les moyens d'agitation peuvent comprendre un fouet repliable contre l'ensemble d'axes.
Les moyens de découpe peuvent comprendre des couteaux avec un flanc large, pour le mélange à vitesse faible dans un sens, et un bord de coupe effilé, pour la découpe à vitesse élevée dans l'autre sens.

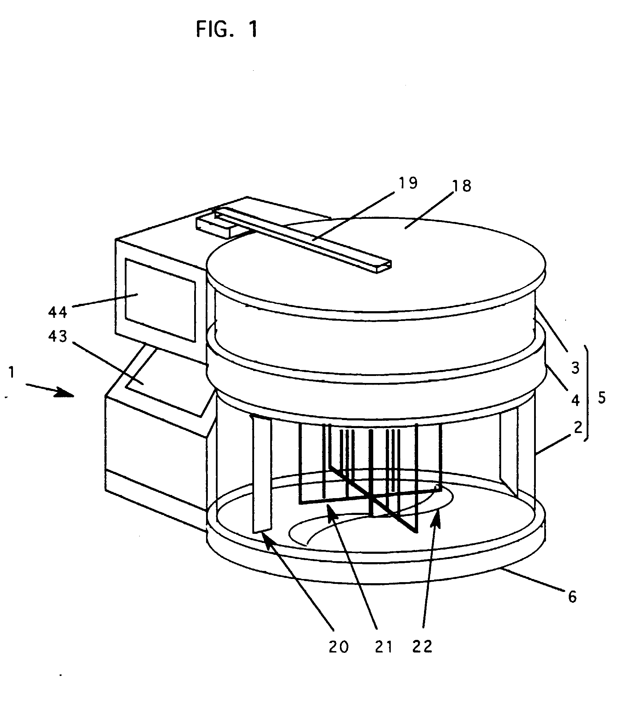

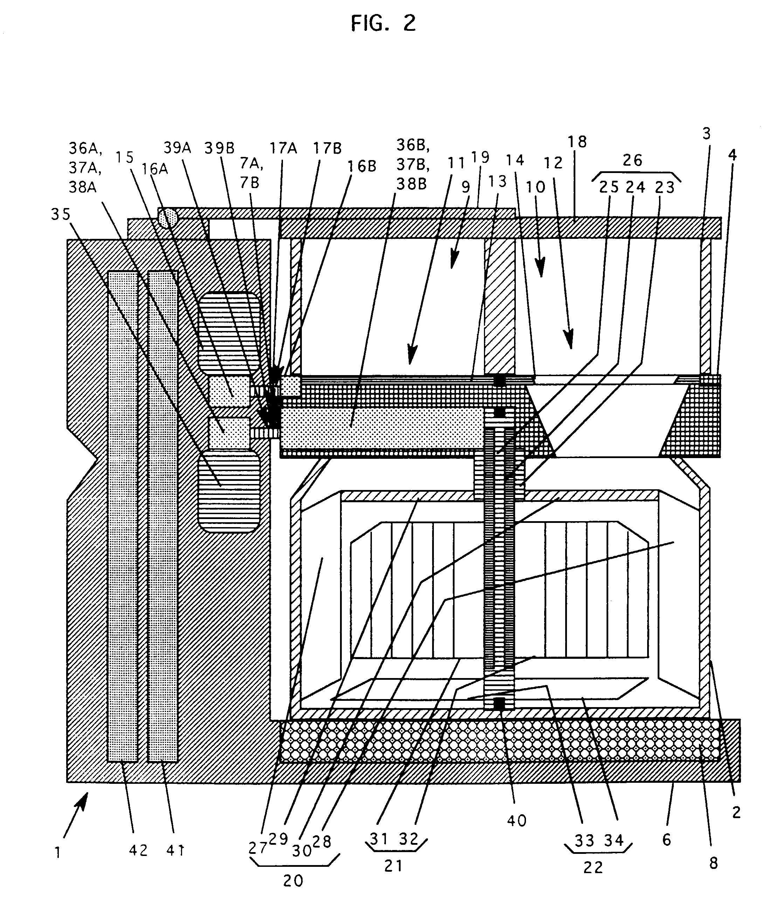

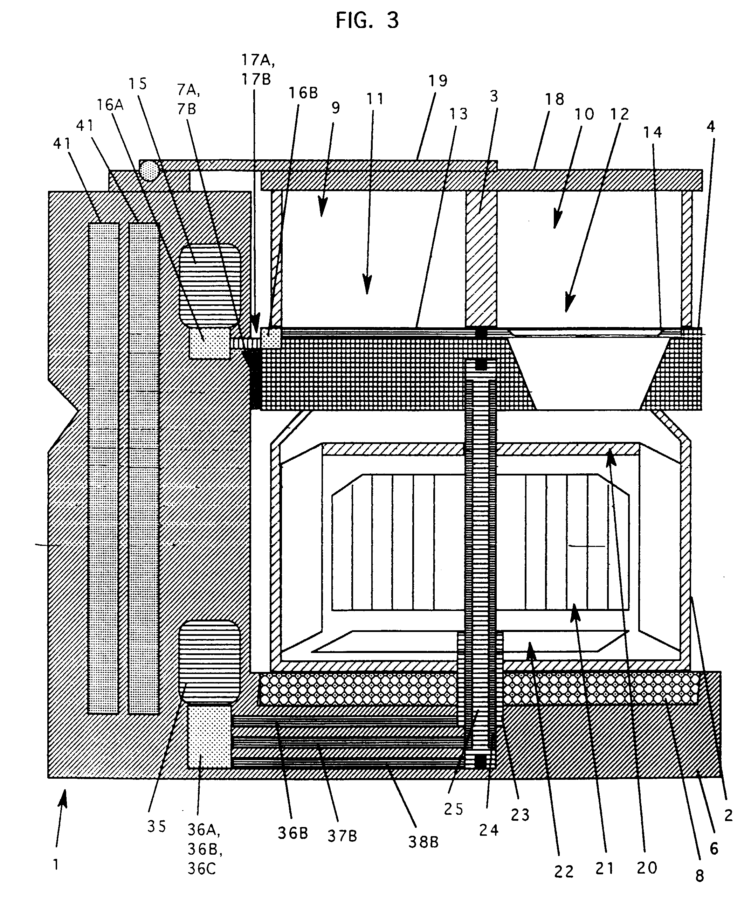

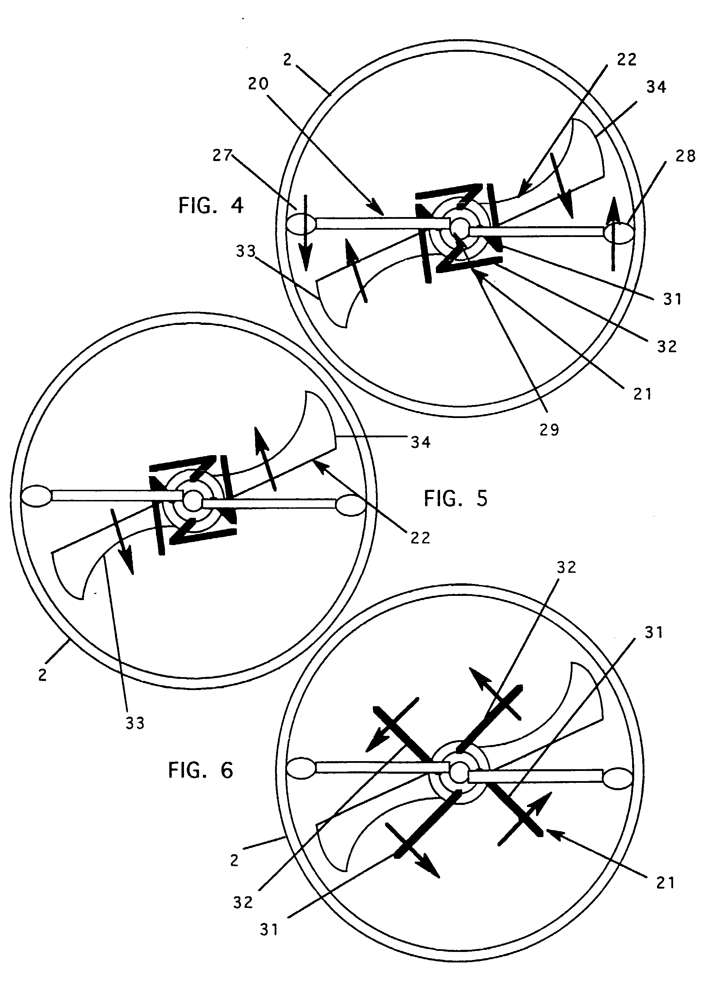

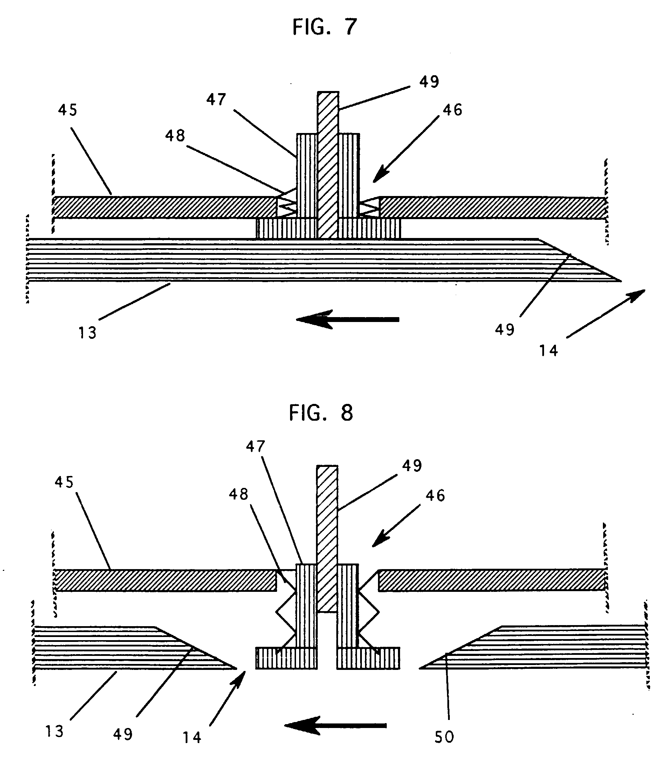

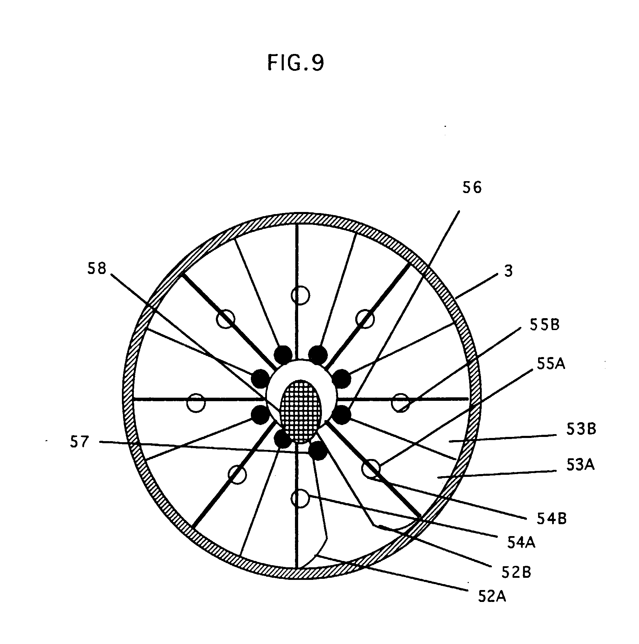

On comprendra mieux l'invention à la lecture de la description suivante d'un exemple de réalisation effectuée en référence aux dessins annexés parmi lesquels :
. la figure 1 est une vue en perspective d'un préparateur culinaire selon l'invention ;
. la figure 2 est une vue en coupe verticale du préparateur de la figure 1 ;
. la figure 3 est une vue analogue à la figure 2, dans une variante de réalisation ;
. les figures 4, 5 et 6 sont des vues schématiques de détail en plan et en coupe du préparateur de la figure 1 illustrant différents modes de fonctionnement de moyens de manipulation du préparateur ;
. la figure 7 est une vue schématique de détail en coupe verticale du préparateur de la figure 1 montrant le fond d'un compartiment adapté pour contenir des liquides, dans une position de fermeture d'un obturateur ;
. la figure 8 est une vue analogue à la figure 7, dans une position d'ouverture de l'obturateur ;
. la figure 9 est une vue schématique de détail en plan et en coupe du préparateur de la figure 1 dans une variante de réalisation.

Les figures 1 et 2 représentent un préparateur culinaire qui comporte un élément principal ou corps désigné dans son ensemble par la référence 1, regroupant la plupart des fonctions techniques, un récipient 2 amovible destiné à contenir le plat cuisiné, et un conteneur compartimenté 3, également amovible, destiné à contenir les ingrédients du plat.
Le conteneur 3 est susceptible d'être monté fixe sur le récipient 2 par l'intermédiaire d'un élément intermédiaire 4, de façon à constituer un ensemble amovible qui sera désigné par la référence
5. Le conteneur 3 est alors disposé au-dessus du récipient 2, l'élément intermédiaire 4 ayant la forme d'un plateau intercalaire.
Le corps 1 regroupe les fonctions d'entraînement, de commande et de programmation du préparateur culinaire. Il présente la forme d'un bloc comportant une base déportée 6 sur laquelle l'ensemble amovible 5 peut être déposé dans une position de fonctionnement. L'ensemble amovible 5 est susceptible d'être verrouillé contre le corps 1 dans cette position de fonctionnement. Le verrouillage est ici réalisé par des moyens de verrouillage/déverrouillage 7A, 7B complémentaires prévus sur le corps 1 et sur l'élément intermédiaire 4 (figure 2).
La base 6 contient des moyens de chauffage, par exemple une plaque électrique 8 à résistance, ou un moyen équivalent. En variante, le récipient 2 pourrait présenter un fond chauffant, des moyens de liaison électrique étant alors prévus entre le récipient 2 et le corps de l'appareil 1 en position de fonctionnement, par exemple à travers l'élément intermédiaire 4 par un moyen de connexion/déconnexion.
Le récipient 2 est de forme générale cylindrique de révolution. Il est totalement ouvert à sa partie supérieure.
Le conteneur 3 est également de forme générale cylindrique. Sa partie inférieure est environ de même diamètre que la partie supérieure du récipient 2. Il est divisé en plusieurs compartiments tels que 9, 10. Ces compartiments 9, 10 sont en forme de secteurs angulaires. Ils comportent chacun une ouverture 11, 12 au niveau de leur fond.
L'élément intermédiaire 4 est de forme générale annulaire et comporte un moyen de mise en communication des compartiments 9, 10 du conteneur 3 avec le récipient 2. Ce moyen de mise en communication est constitué par un disque rotatif 13 comportant une ouverture 14 en forme d'un secteur angulaire sensiblement de même forme qu'un compartiment 9, 10 de la partie supérieure du conteneur 3.
On notera que les compartiments peuvent être de dimensions et de forme identiques ou différentes. Lorsque les dimensions sont différentes, l'ouverture 14 du disque rotatif 13 est de préférence de dimensions inférieures ou égales à celles du compartiment le plus petit. Les déplacements du disque 13 sont réglés de façon à présenter l'ouverture 14 au-dessous de chacun des compartiments 9, 10 successivement, et sur la totalité du fond 11, 12 de ceux-ci. Ce résultat peut être obtenu par exemple par un capteur de position angulaire du disque 13 correspondant aux extrémités radiales de chacun des compartiments 9, 10.
Le disque 13 est susceptible d'être actionné en rotation, par exemple pas à pas, par un moteur 15 situé dans l'élément principal 1, par l'intermédiaire d'un mécanisme d'entraînement 16, de façon à libérer le fond de chacun des compartiments 9, 10 successivement. Le mécanisme d'entraînement 16 est disposé pour une part 16A dans le corps 1 et pour l'autre part 16B dans l'élément intermédiaire 4, un moyen de couplage/découplage 17A, 17B étant prévu à l'interface entre le corps 1 et l'élément intermédiaire 4. Le moyen de couplage/découplage 17 est avantageusement associé au moyen de verrouillage/déverrouillage 7 entre l'élément intermédiaire 4 et le corps 1.
Le moyen d'entraînement 16 est avantageusement constitué par des engrenages réalisant la démultiplication désirée de façon à entraîner le disque rotatif 13 à une vitesse adaptée.
Le moyen de couplage/découplage 17 peut être réalisé par exemple par un demi-axe rotatif horizontal en saillie perpendiculairement au corps 1 au niveau de l'emplacement de l'élément intermédiaire 4, et comportant un organe d'accouplement sur lequel vient s'enclencher un organe d'accouplement complémentaire d'un demi-axe de l'élément intermédiaire 4.
Le moyen de verrouillage/déverrouillage 7 peut être constitué par exemple par un système d'encliquetage, ou tout autre moyen analogue.
Le conteneur 3 est équipé d'un couvercle de protection 18. Ce couvercle est monté par l'intermédiaire d'un bras 19 articulé sur le corps 1 de l'appareil. Selon un mode de réalisation simplifié, l'actionnement du couvercle 18 peut être effectué par l'utilisateur. En variante, le bras 19 pourrait être rappelé en position d'ouverture par un ressort, et maintenu en position de fermeture par un organe de verrouillage/déverrouillage. Selon une variante encore plus élaborée, il pourrait être prévu des moyens d'entraînement et de commande du bras 19 en ouverture et en fermeture.
Le couvercle 18 est avantageusement dissociable du bras 19, de façon à permettre un nettoyage aisé.

A l'intérieur du récipient 2 sont disposés des moyens de manipulation des aliments sous la forme de moyens de mélange 20, d'agitation 21 et de découpe 22. Ces moyens de manipulation 20, 21, 22 sont constitués chacun par un ou des outils montés chacun sur un axe central vertical respectivement 23, 24, 25. Afin de permettre l'entraînement indépendant de chacun des moyens, les axes 23, 24, 25 sont des axes gigognes et forment un ensemble d'axes désigné par la référence 26.
Les moyens de mélange 20 comprennent dans l'exemple de réalisation représenté deux spatules latérales 27, 28 diamétralement opposées, adjacentes à la paroi périphérique verticale du récipient 2 du haut jusqu'en bas. Ces spatules sont reliées à l'axe central 23 par des bras supérieurs 29, 30. Les spatules 27, 28 sont destinées à décrocher les ingrédients de la paroi du récipient 2, afin qu'ils retombent au fond de ce dernier. A cet effet, les spatules 27, 28 seront avantageusement profilées et inclinées, et réalisées en matériau souple.
Les moyens d'agitation 21 comprennent un ensemble de fils 31, 32 formant un fouet monté sur l'axe central 24.
Par exemple, les fils 31, 32 du fouet peuvent être articulés et disposés de telle sorte qu'ils sont accolés à l'ensemble d'axes 26 24 dans un sens de rotation, et se déploient dans l'autre sens de rotation (figures 4 à 6).
Les moyens de découpe 22 comportent deux couteaux 33, 34 horizontaux diamétralement opposés, qui sont montés sur l'axe central 25.
Les couteaux 33, 34 peuvent être conformés par une aile munie d'un bord coupant, de manière à mélanger à petite vitesse et découper à grande vitesse, ou bien à mélanger dans un sens et découper dans l'autre sens.
Les moyens de découpe 22 et de mélange 20 coopèrent pour mieux mélanger le fond et la paroi du récipient 2 à petite vitesse, et pour mieux découper à grande vitesse, les ingrédients étant en permanence ramenés depuis la paroi vers l'intérieur et le fond du récipient 2. En outre, le sens de rotation de chacun de ces moyens est inversible, de façon à améliorer leur efficacité.
L'ensemble d'axes gigognes 26 des moyens de mélange 20, d'agitation 21 et de découpe 22 dépasse au-dessus du récipient. Ils sont actionnés en rotation par un moteur 35 du corps 1, par l'intermédiaire de mécanismes d'entraînement respectivement 36, 37, 38. Ces mécanismes d'entraînement sont disposés pour une part 36A, 37A, 38A dans le corps 1 et pour l'autre part 36B, 37B, 38B dans l'élément intermédiaire 4, un moyen de couplage/découplage 39A, 39B étant prévu à l'interface entre le corps 1 et l'élément intermédiaire 4. Les mécanismes d'entraînement 36, 37, 38 sont par exemple constitués par des engrenages réalisant les démultiplications adaptées pour chacun des moyens de traitement et pour chacune des vitesses susceptibles d'être sélectionnées. Le moyen de couplage/découplage 39 est avantageusement associé au moyen de verrouillage/déverrouillage 7 entre l'élément intermédiaire 4 et le corps 1. Il peut être par exemple formé lui aussi de deux demi-axes en regard munis d'organes d'accouplement complémentaires. Ainsi, l'ensemble amovible 5 peut être accouplé ou dissocié du corps 1 d'un seul mouvement associant ou dissociant les moyens de verrouillage/déverrouillage 7 et les moyens de couplage/découplage 17 et 39.
De préférence, l'ensemble d'axes gigognes 26 est également susceptible d'être découplé de l'élément intermédiaire. A cet effet, il est prévu un moyen de verrouillage/déverrouillage entre l'ensemble d'axes et l'élément intermédiaire, ainsi qu'un moyen de couplage/découplage des axes avec les moyens d'entraînement (non représentés). Cela permet ainsi un nettoyage aisé des moyens de manipulation 20, 21, 22.
Afin d'assurer la position de l'ensemble d'axes dans le récipient en cours de fonctionnement, il peut être prévu dans le fond du récipient un ergot 40 sur lequel vient se positionner l'extrémité inférieure de l'ensemble d'axes.

Le corps 1 contient des moyens de programmation et de commande de l'ensemble des moyens d'entraînement, ainsi que du moyen de chauffage du récipient.
Les moyens de programmation et de commande peuvent être constitués par un micro-contrôleur 41 associé à une mémoire 42 comportant plusieurs programmes pré-établis, correspondant à des recettes de fabrication de plats cuisinés. Le micro-contrôleur est relié à un clavier 43 sur lequel l'utilisateur peut composer un code de choix du programme, le choix étant visualisé sur un écran 44 (figure 1).
Le programme peut être choisi par l'utilisateur, soit par l'intermédiaire d'un code sur le clavier 43 qui peut alors être seulement numérique, soit en introduisant le nom de la recette au moyen du clavier 43 qui doit être un clavier alphanumérique. Le clavier 43 peut en outre être réalisé de façon à permettre à l'utilisateur de définir lui-même la programmation de la recette. En variante, le micro-contrôleur 41 pourrait en outre être relié à un lecteur de cartes permettant l'insertion de cartes-programmes contenant des recettes, selon le choix de l'utilisateur.
De préférence, il est prévu que le préparateur puisse également être utilisé de manière aisée comme un appareil de cuisine manuel. A cet effet, le clavier 43 comportera avantageusement un ensemble de touches correspondant à des opérations élémentaires telles que hacher des oignons, battre des oeufs, chauffer et remuer un chocolat au lait, etc.

Selon une variante de réalisation représentée sur la figure 3, les moyens d'entraînement 36, 37, 38 des moyens de manipulation 20, 21, 22 ne sont pas disposés en partie au-dessus de ceux-ci dans l'élément intermédiaire 4, mais actionnent les moyens de manipulation 20, 21, 22 par le dessous, à partir de la base 6.
Comme représenté, les moyens d'entraînement 36, 37, 38 comprennent ici, en remplacement d'un ensemble d'engrenages, un ensemble de courroies et poulies. Le moyen de couplage/découplage 39 est supprimé dans cette variante.

Les figures 4 à 6 représentent schématiquement des modes élémentaires de fonctionnement des moyens de manipulation 20, 21, 22 dans le récipient 2.
Selon un premier mode dit de mélange (figure 4), les moyens de mélange 20 et de découpe 22 sont entraînés lentement en sens contraires, le côté effilé des couteaux 33, 34 étant en arrière. Ainsi, les aliments sont simultanément remués et détachés des parois et du fond du récipient 2 par les spatules 27, 28 et les couteaux 33, 34, par exemple pour accompagner la cuisson d'une préparation.
Selon un second mode dit de découpe (figure 5), les moyens de découpe 22 sont entraînés rapidement, le côté effilé des couteaux 33, 34 étant en avant. De cette manière, les aliments sont découpés, par exemple pour hacher des oignons.
Dans ces deux premiers modes, le fouet 31, 32 des moyens d'agitation 21 est maintenu replié contre l'ensemble 26 d'axes. Selon un troisième mode dit d'agitation (figure 6), les moyens d'agitation 21 sont entraînés rapidement en rotation de telle façon que le fouet 31, 32 est déployé dans le volume du récipient
2. De cette manière, des aliments sont agités, par exemple pour battre des oeufs.
Dans le second et le troisième mode, les spatules 27, 28 des moyens de mélange 20 pourraient également être entraînés lentement, de façon à détacher les aliments des parois et à les ramener vers le centre du récipient 2.
Ces différents modes de fonctionnement peuvent être associés et combinés, de façon que les moyens de manipulation soient mis en rotation dans les deux sens, à plusieurs vitesses (mélange lent, mélange rapide, découpe lente, découpe rapide, agitation rapide).

Selon une variante de réalisation permettant l'utilisation d'ingrédients liquides, qui est représentée sur les figures 7 et 8, certains compartiments 45 du conteneur 3 comportent une ouverture 46 qui n'est pas en forme de secteur correspondant à l'ouverture 14 du disque rotatif 13. Cette ouverture 46 est de dimensions plus réduite, et comporte en sous-face un obturateur 47 mobile, qui est rappelé en position d'ouverture éloignée de l'ouverture par un ressort 48. L'ouverture 46 de dimensions réduites se trouve sur le trajet de l'ouverture 14 du disque rotatif 13. Ainsi, l'obturateur 47 est maintenu en position de fermeture par le disque rotatif 13 jusqu'au moment où le bord avant 49 de l'ouverture 14 du disque rotatif 13 se présente au-dessous de l'ouverture 46 de dimensions réduites. A ce moment, l'obturateur 47 n'est plus maintenu contre l'ouverture 46, mais est rappelé en position d'ouverture par le ressort 48, de telle sorte que le liquide contenu dans le compartiment 45 se déverse dans le récipient 3 à travers l'ouverture 14. Lorsque le bord arrière 50 de l'ouverture 14 du disque rotatif 13 se présente au-dessous de l'ouverture 46 de dimensions réduites, l'obturateur 47 est au contraire ramené et maintenu à nouveau contre l'ouverture 46 de dimensions réduites.
De préférence, le bord arrière 50 est en biseau incliné de haut vers le bas vers l'intérieur de l'ouverture 14 du disque rotatif 13, de façon à faciliter la remontée de l'obturateur 47. Le bord avant 49 peut également être biseauté de façon à rendre progressive l'ouverture de l'obturateur 47.
Afin d'adapter la vitesse d'écoulement du liquide, la position d'ouverture de l'obturateur 47 peut être réglable. Par exemple, l'obturateur peut être monté sur une vis 51 en étant alors réglable par rotation sur cette vis 51.

Selon une seconde forme de réalisation du moyen de mise en communication, représentée sur la figure 9, les fonds des compartiments 9, 10 du conteneur 3 sont constitués chacun par un ou deux volets respectivement 52A et 52B, 53A et 53B articulés sur le bord inférieur des parois radiales des compartiments 9, 10. Les volets sont rappelés en position ouverte par des ressorts 54A et 54B, 55A et 55B, et bloqués en position fermée par un verrou 56, 57.
Les verrous 56, 57 sont susceptibles d'être actionnés en ouverture par une came rotative 58 montée sur un axe vertical central. Cette came 58 est entraînée pas à pas de façon analogue au disque rotatif 13 par le moteur d'entraînement 15, par l'intermédiaire du moyen d'entraînement 16.

## Revendications

1. Préparateur culinaire pour la fabrication de plats cuisinés, comprenant :
. un corps (1) principal du préparateur ;
. un récipient (2) de préparation du plat cuisiné ;
. un conteneur (2) divisé en plusieurs compartiments (9, 10) destiné à contenir les ingrédients du plat cuisiné, disposé au-dessus du récipient (2), chaque compartiment (9, 10) comportant une ouverture (11, 12);
. des moyens (13) de mise en communication des compartiments (9, 10) du conteneur (3) avec le récipient (2), et des moyens (15, 16) d'entraînement de ces moyens (13) de mise en communication à partir du corps (1) principal du préparateur ;
. des moyens (20 à 22) de manipulation des ingrédients dans le récipient (2), et des moyens (35, 36 à 38) d'entraînement de ces moyens (20 à 22) de manipulation à partir du corps (1) principal du préparateur ;
. des moyens (6) de chauffage du récipient ;
. des moyens (41, 42) de programmation et de commande des moyens de mise en communication (13), de manipulation (20 à 22), de chauffage (6) et d'entraînement (15, 16, 35, 36 à 38);
caractérisé par le fait que :
. le conteneur (3) est monté fixe sur le récipient (2) au moyen d'un élément intermédiaire (4) en position de fonctionnement ;
. le récipient (2), le conteneur (3) et l'élément intermédiaire (4) constituent un ensemble qui est monté fixe sur le corps (1) du préparateur en position de fonctionnement ;
. les moyens (13) de mise en communication des compartiments (9, 10) du conteneur (3) avec le récipient (2) sont disposés dans l'élément intermédiaire (4).

2. Préparateur culinaire selon la revendication 1, caractérisé par le fait que l'ensemble formé par le récipient (2), le conteneur (3) et l'élément intermédiaire (4) est amovible, et le préparateur comprend des moyens de verrouillage/déverrouillage (7) de l'ensemble (2, 3, 4) sur le corps (1) et des moyens de couplage/découplage (17, 37) des moyens d'entraînement (15, 16, 35, 36 à 38).

3. Préparateur culinaire selon l'une quelconque des revendications 1 ou 2, caractérisé par le fait que les compartiments (9, 10) sont disposés en secteurs.

4. Préparateur culinaire selon l'une quelconque des revendications 1 à 3, caractérisé par le fait que le moyen de mise en communication est constitué par un disque rotatif (13) comportant une ouverture (14).

5. Préparateur culinaire selon la revendication 4, caractérisé par le fait que l'ouverture (46) d'au moins un compartiment (45) comporte un obturateur (47) situé sur le trajet de l'ouverture (14) du disque rotatif (13) et qui est rappelé en position éloignée de l'ouverture (46) du compartiment (45) par un ressort (48), de façon à être ouvert lorsque l'ouverture (14) du disque (13) se trouve au droit de l'ouverture (46) du compartiment (45), et fermé sinon.

6. Préparateur culinaire selon la revendication 5, caractérisé par le fait que le bord (49) de l'ouverture (14) du disque rotatif (13) situé à l'arrière dans le sens de rotation du disque (13) est incliné de haut en bas vers l'intérieur de l'ouverture, de façon à faciliter la remontée du ou des obturateurs (47).

7. Préparateur culinaire selon l'une quelconque des revendications 1 à 3, caractérisé par le fait que :
. les moyens de mise en communication comprennent une came centrale rotative (58) ;
. chaque compartiment (9, 10) du conteneur (3) est muni de volets articulés (52, 53) susceptibles d'obturer son ouverture (11,12) ;
. les volets (52, 53) de chaque compartiment (9, 10) sont rappelés vers une position d'ouverture, et sont maintenus en position fermée par un verrou (56, 57);
. les verrous (56, 57) des compartiments (9, 10) sont disposés de façon à être actionnés successivement en ouverture par la came centrale rotative (58).

8. Préparateur culinaire selon l'une quelconque des revendications 1 à 7, caractérisé par le fait que les moyens de manipulation (20 à 22) des aliments sont portés par l'élément intermédiaire (4).

9. Préparateur culinaire selon l'une quelconque des revendications 1 à 7, caractérisé par le fait que les moyens de manipulation (20 à 22) sont portés par une base (6) déportée du corps (1) de l'appareil.

10. Préparateur culinaire selon l'une quelconque des revendications 1 à 9, caractérisé par le fait que les moyens d'entraînement (35, 36 à 38) comprennent au moins un moteur et un ensemble d'engrenages connectés à des pignons d'axe des moyens de manipulation (20 à 22).

11. Préparateur culinaire selon l'une quelconque des revendications 1 à 9, caractérisé par le fait que les moyens d'entraînement (35, 36 à 38) comprennent au moins un moteur et un ensemble de courroies entourant des poulies d'axes des moyens de manipulation (20 à 22).

12. Préparateur culinaire selon l'une quelconque des revendications 1 à 11, caractérisé par le fait que :
. le récipient (2) est de forme cylindrique de révolution ;
. les moyens de manipulation (20 à 22) comprennent des moyens de mélange (20), des moyens d'agitation (21) et des moyens de découpe (22), ces moyens (20 à 22) étant montés à rotation sur un ensemble (26) d'axes gigognes (23 à 25) selon un axe vertical central du récipient (2).

13. Préparateur culinaire selon la revendication 11, caractérisé par le fait que le moyen de mélange (20) comprend des spatules (27, 28) avec au moins un flanc horizontal et un flanc vertical excentré adjacent à la paroi périphérique verticale du récipient (2).

14. Préparateur culinaire selon l'une quelconque des revendications 12 ou 13, caractérisé par le fait que le moyen d'agitation (21) comprend un fouet (30, 31) repliable contre l'ensemble d'axes (26).

15. Préparateur culinaire selon l'une des revendications 12 à 14, caractérisé par le fait que le moyen de découpe (22) comprend des couteaux (33, 34) avec un flanc large, pour le mélange à vitesse faible, et un bord de coupe effilé, pour la découpe à vitesse élevée.
